# EUROPEAN PATENT APPLICATION

(11) **EP 3 358 402 A1**
(43) Date of publication of application: **08.08.2018**
(21) Application number: 18155014.6
(22) Date of filing: 02.02.2018
(51) Int. Cl.: G03B 15/06, G03B 17/38, G03B 17/56

(54) **MIRROR FOR TAKING SELFIES**

(30) Priority: 02.02.2017 US 201762453549 P; 20.12.2017 US 201715849318
(71) Applicant: Krause, Kameron, Manhattan Beach, CA 90266 (US)
(72) Inventor: Krause, Kameron, Manhattan Beach, CA 90266 (US)
(74) Representative: Schaumburg und Partner Patentanwälte mbB

(57) **Abstract**

The present invention is a mirror having a built-in camera, and a communication chip such as a Bluetooth chip configured to communicate via the internet and/or wireless connection with a remote device such as a smartphone. The mirror has a mirrored surface, and may also have a plurality of lights, such as light emitting diodes, that emit light from the mirror. The device can include a time indicator to indicate when the photo is about to be taken. The mirror further comprises a control circuit and an input device such as a switch. The input device may include a camera activation button to wirelessly activate the camera to take a picture or video.

## Description

### Field of the Invention

The invention relates to mirrors configured to take and transmit photos, and more specifically to mirrors having a camera as well as communication capabilities.

### Background of the Invention

So-called "selfie" photos are commonplace today. Such camera shots, often taken with a smart phone or digital camera, can enable a user to take a photo of him- or herself. Selfies may be taken with a smart phone/camera held at arm's length or pointed at a mirror, rather than by using a self-timer. Selfie sticks can be used to improve position of the camera with respect to the subject. However, such selfies often result in unflattering shots because the user/subject is often guessing at the specific area and image the camera is covering. Selfie photos are notorious for having the subject/user off-center, and also for the subject/user being in an unflattering pose. Selfies can also include an awkward image of the user's extended arm or selfie stick.

What is needed is a the capability for the subject/user to see, prior to the taking of the photo, the subject's/user's actual pose/image, and also to see the image area of the photo to make sure that the subject/user is properly positioned in the photo. The current invention meets this need.

### Summary of the Invention

The invention is for devices, systems, and methods for taking and transmitting photos of a user.

Devices according to the invention comprise a mirrored device with a front mirror surface and a camera therein. The camera lens may preferably be located toward the top of the mirrored device, and may be behind a portion of the front mirror surface which is a 2-way mirror in order to permit the camera to view a user/subject standing in front of the mirrored device. The camera lens may be surrounded on 2 sides, 3 sides (e.g., left side, right side, bottom), or on all sides (left side, right side, bottom, top) by the front mirrored surface of the mirrored device.

The mirrored device may be circular, oval, square, rectangular, or other shapes, depending on the particular application. The mirrored device can be of various sizes, with the size determined by the particular application. For example, small mirrors can be used for taking individual face photos, while larger mirrors can be used for full body photos and/or group photos.

The mirrored device may include a wireless transmission capability (e.g., Bluetooth, cellular, and/or other wireless) and/or wired transmission capability (e.g., USB port, etc.) through which a taken photo can be transmitted to a smart phone/camera and/or other remote site.

The mirrored device may be triggered to take the photo by one or more different actions. For example, the user/subject may stand in front of the mirrored device at a set distance (e.g., at a range between 1 and 6 feet) and hold still to trigger the camera; the user/subject may make a physical gesture (such as waving) to activate the camera; the user/subject may activate a switch physically located on the mirrored device; the user/subject may activate a switch and/or app located on a smart phone held by the user/subject, where the smart phone is in wired or wireless communication with the mirrored device. The user/subject may use a wireless controller (Bluetooth/WLAN) to trigger the camera in the selfie mirror to take the picture. This controller would be a software application (aka "app") on the user's phone (e.g., part of an application on the user's phone), or a separate controller which works directly with the mirrored device.

Once the mirrored device is triggered to take a photo, the photo may be taken immediately. The trigger may start a countdown, after which the photo may be taken. Multiple photos may be taken in response to the trigger being activated, such as where a series of photos are taken in rapid sequence. Video may be taken. Where a countdown is used, indicia may be included to indicate the countdown, such as numbers (e.g., in an LED/LCD display) that count down to the photo being taken, and/or flashing lights that flash more rapidly as the photo time approaches. The indicia may be provided from the mirrored device and/or from a user's portable electronic device that may be paired or otherwise in communication with the mirrored device.

Once the photo or photos are taken, the photo(s) may be automatically transmitted to the user/subject's smart phone and/or to an internet or other remote site such as Facebook, Twitter, SnapChat, etc.

The mirrored device may have indicia indicating the screen size of the photo being taken. Such indicia may be in the form of built-in lights that indicate the borders and/or corners of the photo being taken. The indicia may be fixed and may be based on the user or other target being a set distance from the mirror. The indicia may be variable and may vary the indicated screen size based on the distance of the user/target from the mirrored device. For such variable indicia, the mirror may include a distance sensor configured to determine the distance of the user/target from the mirrored device, with the sensor data being used by a processor to determine the proper indicated screen size.

Built-in lights may be included, such as lights that surround the perimeter of the mirrored surface of the mirrored device. Such built-in lights may illuminate the user/subject to provide better lighting for the photo(s), and/or may serve as indicia of the countdown and/or photo screen size, etc.

In a further embodiment of the invention, a system includes the mirrored device mentioned above combined with the user/subject smart phone, with the smart phone communicating with the mirrored device via wired/wireless connection. The system may also include a connection, such as an internet connection, in communication with a remote site such as Facebook, Twitter, SnapChat, etc.

The invention may also include an app on the smart phone, with the app configured to facilitate interaction between the smart phone and the mirrored device. In one embodiment of a system and method of the invention, the user can activate the mirrored device using an app in the user's smart phone (or similar electronic device). The user can activate the smart phone app to turn the mirrored device on (or the mirrored device may be turned on manually by the user using an on/off switch on the device). The user can activate the smart phone app to control the mirrored device to begin sending images to the smartphone from the device camera. The images may initially be low-resolution images or streaming video provided to the smartphone, which the user can look at and use to facilitate the user's pose and/or facial expression, distance from the mirror, etc. The app in the smartphone may control other actions of the mirrored device, such as controlling the brightness of the lights on the device in order to provide desired lighting for the photos. When the user is satisfied with the lighting, distance from mirror, etc., the user can activate the mirrored device via the smartphone app to take the picture(s), including high-resolution photos and/or video. Once activated, the photos/video may be taken immediately, or there may be a delay. If there is a delay, the mirrored device and/or smart phone may count down to the taking of the photo(s), such as by providing a countdown via a display on the mirrored device and/or by flashing lights on the mirrored device and/or speakers on the mirrored device or some other countdown signal. The app on the smart phone may provide the countdown, such as via a speaker (in a verbal countdown) or visual (e.g., flashing lights or numbered countdown).

The methods, systems, and devices of the invention are set forth in part in the description which follows, and in part will be obvious from the description, or can be learned by practice of the methods, devices, and systems. The advantages of the methods, devices, and systems will be realized and attained by means of the elements and combinations particularly pointed out in the appended claims. It is to be understood that both the foregoing general description and the following detailed description are exemplary and explanatory only and are not restrictive of the methods, devices, and systems as claimed.

### Brief Description of the Drawings

FIG. 1 depicts a system according to an embodiment of the invention;
FIGS. 2A-2D depict front, back, side, and top views of a mirrored device according to an embodiment of the invention;
FIG. 3 depicts a schematic of a mirrored device according to an embodiment of the invention;
FIG. 4 depicts a front view of a mirrored device according to an embodiment of the invention;
FIGS. 5A-5F depict front perspective, rear perspective, front, side, front (closeup), and side (close-up) of a mirrored device according to an embodiment of the invention;
FIG. 5G depicts a perspective view of a wall mounting bracket and a mirrored device according to an embodiment of the invention;
FIGS. 5H-5K depict side views of a mirrored device secured to a wall in various positions according to an embodiment of the invention;
FIG. 5L depicts a side view of a mirrored device sitting on a table or countertop according to an embodiment of the invention;
FIGS. 6A and 6B depict front views of an app display of a personal electronic device for use with a camera-equipped mirror according to an embodiment of the invention;
FIG. 7 depicts a flow chart of operation according to an embodiment of the invention; and
FIGS. 8A and 8B depict front views of a mirrored device with camera lens cover according to an embodiment of the invention.

### Detailed Description of Preferred Embodiments of the Invention

Dimensions given are examples, and the invention encompasses other dimensions as well.

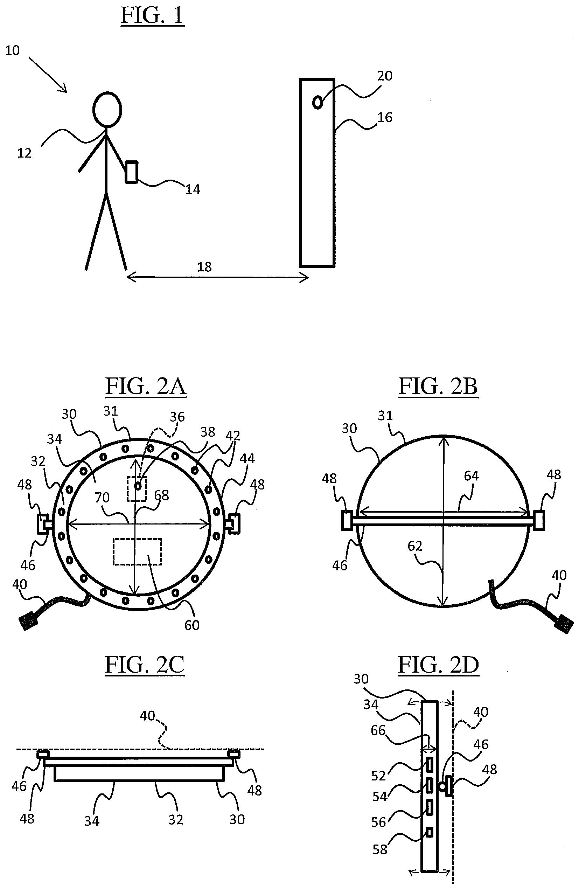

FIG. 1 depicts a system 10 for use by a user/subject 12 in taking photos. The system 10 comprises a smart phone/portable electronic device 14 and a mirrored device 16. The user/subject 12 stands in front of the mirrored device 16 at a distance 18. The mirrored device 16 is activated to take a photo of the user/subject 12. The photo may be held in an internal memory of the mirrored device 16, and/or transmitted to the smart phone/camera 14, and/or transmitted via an internet and/or wireless connection 20 to a remote site such as Facebook, Twitter, SnapChat, etc.

As depicted in greater detail in FIGS. 2A-2D, a mirrored device 30 according to an embodiment of the invention has a main body 31 substantially circular in shape. The front surface 32 has a mirrored surface 34. A camera 36 is positioned in the device, with the camera lens 38 positioned facing outward (i.e., toward the front) through a clear and/or 2-way portion of the mirrored surface 34. Power may be supplied to the device via batteries and/or a power cord 40. Lights 42 may be positioned to illuminate the user, with the lights potentially positioned around the perimeter 44 of the device 30. The lights 42 may be LEDs, fluorescent, incandescent, etc. Hinges 46 and/or other support structures may be included with which the device 30 can be secured to a wall 50 or other mounting surface, such as via brackets 48. The hinge serves as a rotation point around which the device can be partially rotated so that the user can adjust the view in the mirrored surface 34 and of the camera 36. Control switches such as an on/off switch 52 and camera activation switch 54 and bluetooth/wireless activation/pairing switch 56 may be included. A USB port 58 or other wired connection input may be included to link the camera or other interior components (e.g., computer/memory) to the user's smart phone or a laptop computer, etc.

The device 30 may include a built-in display 60, such as an LCD monitor, which can be positioned on the device 30 at a position to show information and/or images to a user. For example, as depicted in FIG. 2A the display 60 may be behind a portion of the mirror 34 that permits the display 60 to be seen by the user through the mirror 34. The display 60 may provide countdown indicia (such as countdown numbers), and/or images (such as images being relayed from the camera 36).

The device 30 has an overall height 62, overall width 64, and overall thickness 66 (not including the brackets and mounting bar). In the circular shape depicted in FIGS. 2A-2D, the overall height 62 is about the same as the overall width 64. The mirror portion 34 depicted is also circular, and has a mirror height 68 which is about the same as the mirror width 70. For a device 30 sized for providing facial photos (aka "head shots"), the mirror height 68/mirror width 70 may be between 6 inches and 12 inches. An oval mirror Note that the mirror 34 may extend all the way to the perimeter of the device 30, such as where there are no lights 42 at the perimeter and/or the mirror is a 2-way mirror over the perimeter lights 42.

Other dimensions and shapes are also within the scope of the invention. For example, the mirror could be rectangular in shape, having a height between 20 and 28 inches and a width between 16 and 24 inches. For example, a mirror could have a height of 23 inches and width of 19 inches. In a further example, dimension could include a height between 32 and 40 inches and a width between 20 and 28 inches, such as a height of 36 inches and width of 24 inches.

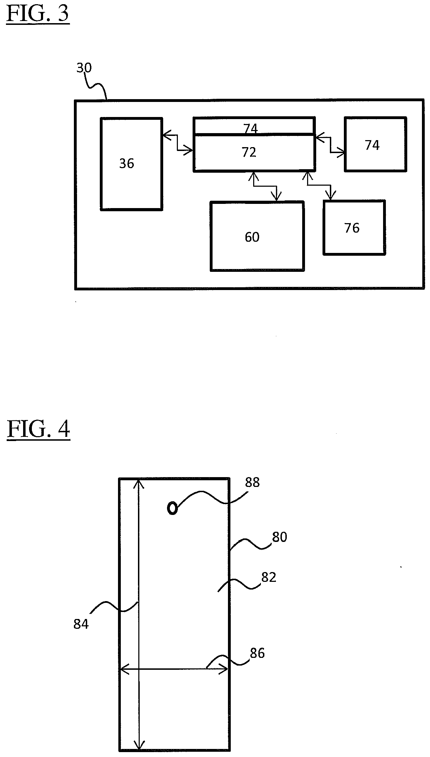

FIG. 3 depicts a schematic of components of the device 30, including internal camera 36, display 60, memory 70, computer/processor 72, and wireless transmitter/receiver 74 (such as a wireless communication chip). The device 30 may also include a range indicator and/or motion detector 76 (such as an optical, microwave, or acoustic sensor/transmitter) that detects the presence of a user and/or measures the distance from mirror to user. The memory 70 can store images taken by the camera 36. The processor 72 may be configured to process images and/or calculate distance from user to mirror and/or interact with a user's smartphone and/or activate/operate the camera. The device 30 may communicate with the internet and/or user smart phone/computer via the wireless transmitter/receiver 74 and/or the wired port (such as the USB port 58). The camera 36 may be activated by the camera activation switch 54 and/or via a smart phone and/or via movement or other action of the user/subject, with such activation potentially activating a countdown to the actual photo(s) being taken. Image filtering/modification capability may be in the device; however, in a preferred embodiment the device does not include such image filtering/modification software, instead permitting the user to use his/her smartphone or other external computer to modify the images.

In one embodiment of a system and method of the invention, the device 30 is controlled by an app in the user's smart phone (or similar electronic device). The user can activate the smart phone app to turn the device 18 on (or the device may be turned on manually by the user using on/off switch 52 on the device). The user can activate the smart phone app to control the device 18 to begin sending images to the smartphone from the device camera 36. The images may initially be low-resolution images or streaming video provided to the smartphone, which the user can look at and use to facilitate the user's pose and/or facial expression, distance from the mirror, etc. When the user is satisfied with the lighting, distance from mirror, etc., the user can activate the device 30 via the smartphone app to take the picture(s). Once activated, the picture(s) may be taken immediately, or there may be a delay. If there is a delay, the device 30 may count down to the taking of the photo(s), such as by providing a countdown via a display 60 (if included) and/or by flashing the lights 42 or some other countdown signal (e.g., countdown from the smartphone via the app therein).

FIG. 4 depicts another embodiment of a device 80 according to the invention, where the device 80 is configured to taking full length body photos of a user/subject. The device 80 includes a rectangular mirror 82 having a height 84 and width 86. The height 84 may be between 32 and 72 inches in order to accommodate full body height photos of a user/subject. The camera lens 88 is positioned toward the top of the device 80.

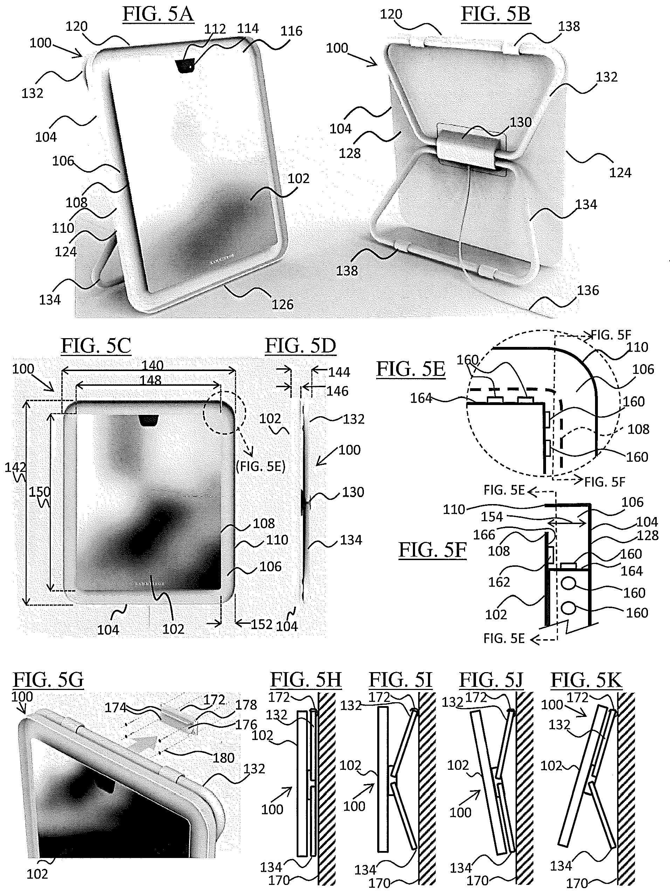

FIGS. 5A-5F depict a further embodiment of a device 100 according to the invention. The device 100 has a front mirrored surface 102 with a housing/body 104 positioned behind and extending around the perimeter of the mirrored surface 102. A light diffusing channel 106 separates the mirror outer perimeter edge 108 from the housing outer perimeter edge 110. A camera 112 and power/status indicator 114 are positioned facing outward from the device 100, and in the particular embodiment depicted are positioned adjacent a top edge 116 of the mirrored surface 102.

The housing 104 has a housing top 120, housing bottom 122, housing sides 124, housing front 126, and housing rear 128. Toward the middle of the housing rear 128 is secured a connecting mount enclosure 130 which connects upper and lower legs 132, 134 and also contains the connection for the power cord 136. The connecting mount enclosure 130 and/or housing 104 serve to enclose various components of the device 100, such as processor, memory, communications (e.g., Bluetooth transmitter), battery, communication ports (e.g., USB port), etc., as discussed with respect to previous embodiments. Padded feet 138, which may be made of rubber or silicon or similar shock-absorbing/padding materials, may be included on the upper and lower legs 132, 134.

The dimensions of the device 100 depend on the particular application and preferences of the user. A device 100 such as the depicted in FIGS. 5A-5F may have a device overall width 140 and device overall height 142 (which in the embodiment depicted is the housing width and height), as well as a device overall thickness 144. In one embodiment the overall width 140 can be between 50 cm and 70 cm, or between 55 cm and 65 cm; the overall height 142 can be between 60 cm and 80 cm, or between 65 cm and 75 cm. The device 100 may have a device overall thickness 144 of 8 cm or less, such as between 5 cm and 7 cm. The device housing 104 may have a housing thickness 146 of between 2 cm and 4 cm, such as 3 cm. The thickness of the legs 132, 134 and connecting mount enclosure 130 make up the rest of the overall thickness 144. The mirrored surface 102 may have an overall mirror width 148 and overall mirror height 150 just slightly smaller than the dimensions of the overall device and/or housing. For example, the overall mirror width 148 may be between 40 cm and 60 cm, or between 45 cm and 55 cm. The overall mirror height 150 may be between 50 cm and 70 cm, or between 55 cm and 65 cm. The light diffusing channel may have a channel width 152 between 4 cm and 6 cm, or 5 cm. A channel depth 154 may be between 2 and 4 cm, or 3 cm.

The device 100 may include built-in lights 160, 162 configured to light the user's face. The lights 160, 162 may be configured to provide soft diffuse lighting to the user's face, such as be positioning the lights 160, 162 within the light diffusion channel 106 so that the lights do not shine directly onto the user's face but instead reflect within the light diffusing channel 106. Some lights 160 may be positioned on the on an inner surface 164 of the housing 104. Alternatively, or additionally, some lights 162 may be positioned on a back side 166 of the mirrored surface 102.

As depicted in FIGS. 5G-5K, the device 100 may be mounted to a wall 170 via a bracket 172, which may include bracket connectors 174 forming a U-shaped channel 176 sized to removably receive a leg (e.g., upper leg 132) of the device 100. The bracket 172 may include screw holes 178 configured to receive screws 180 by which the bracket 172 may be secured to a wall 170. The user can thus adjust the angle of the mirrored surface 102 with respect to the wall 170 (and with respect to the user) by pulling and/or pushing on the upper and/or lower edges of device 100, with some options for angles depicted in FIGS. 5H-5K. Note that in the embodiment of FIGS. 5H-5K, the lower leg 134 is not secured to the wall 160 and can move up or down along the wall 160 in order to accommodate different angle adjustments as desired by the user.

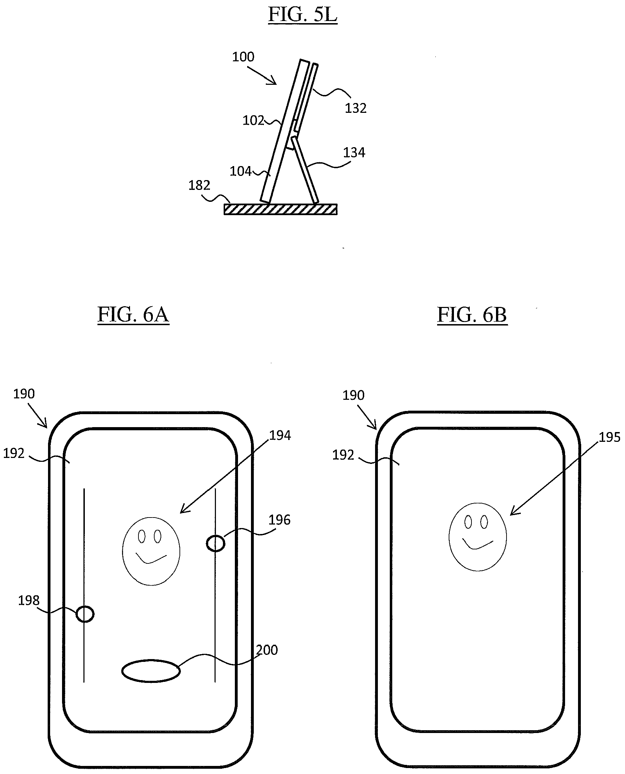

As depicted in FIG. 5L, the device 100 may be positioned on a table or countertop surface 182, with the device 100 supported by the lower leg 134. The user can adjust the angle of the mirrored surface 102 with respect to the countertop surface 182 (and with respect to the user) by changing the angle of the lower leg 134 with respect to the housing 104 of the device 100.

The invention may include a mobile app downloaded to the user's cell phone or similar mobile electronic apparatus (e.g., tablet, etc.). The mobile app may provide the user with the ability to control operation of the mirror/camera device of the invention, including controlling the flash, brightness, zoom (e.g., digital zoom), timer, and activation. The mobile app may provide controls to the user via the screen of the user's cell phone/tablet. Examples of control screens for the invention are depicted in FIGS. 6A-6B. As depicted in FIG. 6A, a cell phone/tablet 190 has a screen 192 which provides an image 194 of the user, which may be a live image provided from the mirror camera. The cell phone/tablet 190 may provide a brightness control 196 which can be adjusted up and down, such as by dragging the user's finger up or down along the brightness control 196 line. The cell phone/tablet 190 may provide a timer control 198 which can be adjusted up and down, such as by dragging the user's finger up or down along the timer control 198 line. Flash and other controls (e.g., zoom, color, etc.) may also be provided. The camera can be activated (such as by activating a timer) by the user tapping or otherwise engaging an activation zone 200 on the display, causing the camera to take a photo and transmit it to the cell phone/tablet 190.

As depicted in FIG. 6B, once the desired one or more photos are taken, the photo(s) 195 is/are displayed on the screen 192 of the cell phone/tablet 190. The user can elect to delete the photo (such as by swiping left on the screen 192 when the photo is displayed), or save the photo (such as by swiping right on the screen 192 when the photo is displayed). The user may also have the option to modify the photo(s) 195 (e.g., modifying brightness, apply filter(s), crop, resize, etc.) and/or upload the photo(s) 195 to remote devices and/or internet and/or social media.

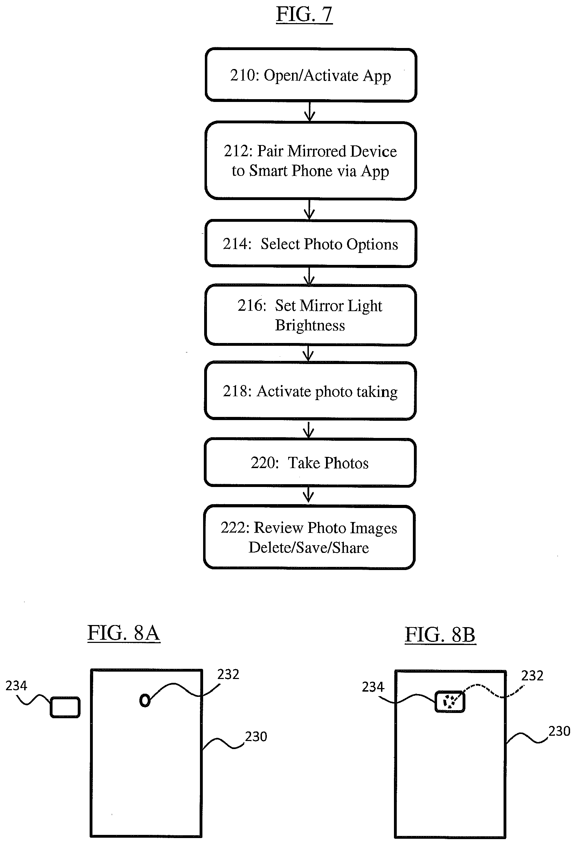

FIG. 7 depicts operational aspects according to an embodiment of the invention. The user can activate an app 210 on the user's smart phone or other personal electronic device, which may be accomplished by the user pressing the app icon (which typically involves an image representing the particular app) selected from the home screen of the user's smart phone. The mirrored device is also activated (which may occur before, after, or simultaneously with activation of the smart phone app). Activating the mirrored device may be accomplished by activating a physical switch on the device (such as an on/off switch or a Bluetooth® activation switch) and/or by other means, such as by the device detecting movement (e.g., a hand wave) in front of the mirror or via a wireless (or wired) interaction between the mirrored device and the user's personal electronic device. In one embodiment, the app gives the user the option of connecting to a photo gallery within the user's portable electronic device or connecting to a mirrored device. If the user selects to connect to the mirrored device, the user's portable electronic device is paired/synced with the mirrored device 212. Pairing the user's portable electronic device to the mirrored device may involve the user being able to apply a user-selected name to the mirrored device via the portable electronic device and app. Depending on the particular mirrored device and personal electronic device and app, the user-selected name may be stored in the mirrored device and/or in the personal electronic device. The user-selected name may be visible to other smart phones/similar portable electronic devices using Bluetooth or other wireless or wired connections.

With the user's portable electronic device paired with the mirrored device, the user can use the app to select photo options 214, such as the photo layout (e.g., portrait or landscape). The user can also use the app to control the mirror brightness 216, i.e., to increase or reduce the brightness of the mirror lights (such as the mirror lights 42, 160 depicted in FIGS. 2A-2D, 5E-5F) which illuminate the user. The user can look at his/her reflection in the mirror while adjusting the lighting (provide by the mirrored device) on his/her face using the app (which provides a "brightness" function to control the brightness of the lights on the mirrored device), and select and set the desired lighting brightness from the mirrored device when his/her reflection is properly lit (as determined by the user). The user can then activate the photo-taking function of the mirrored device 218, which may include setting a timer via the app (which provides a "timer" countdown function, such as a 1 second to 10 second countdown) at the end of which the mirrored device will take one or more photo images of the user. During the countdown period, the app via the user's personal electronic device may provide a countdown indicator in the form of a visual display of the countdown (e.g., the seconds left before the photo images will be taken) and/or an audio countdown. Just prior to the photo(s) being taken, the app via the user's portable electronic device may provide a warning such as an audio message of "smile" or "look up", etc. The photo(s) is then taken 220 by the mirrored device, and transmitted to the user's personal electronic device. As or just after the photo(s) is taken by the mirrored device, the app via the user's portable electronic device may provide a confirmation message, such as an audio message. The user is then provided the option, via the app, to review the photo(s) 222. The user can then choose to delete the photo (e.g., swipe left to delete), to save the photo (e.g., swipe right to save), and/or to share the photo (such as by wirelessly transmitting the photo to others via wireless connection of the personal electronic device).

If the mirrored device is a private device, such as being in a user's home, the mirrored device may have security protocols which prevent unauthorized parties from connecting to the mirrored device. For example, the mirrored device and/or app may provide the user the opportunity to program in a security code which must be entered by any potential user in order to pair a personal electronic device with the mirrored device. For a mirrored device which is intended to be used by many users, such as a mirrored device provided for use in a public establishment (e.g., nightclub or hair salon), the operational protocols may prevent the mirrored device from pairing with more than one portable electronic device at a time. The protocols may cause the pairing of a portable electronic device to be terminated after a set amount of time (so that another portable electronic device can then be paired, thus giving different users access to the mirrored device).

As a further security precaution against unauthorized use of a mirrored device, the mirrored device may be fitted with a camera lens privacy cover which can be manually activated (such as by sliding the camera lens privacy cover to cover the camera lens) to provide a physical cover over the camera lens. Such a camera lens cover can thus physically block the camera lens, preventing an unauthorized user that may be controlling the camera from taking unauthorized photos. The camera lens cover may be built-in with the mirrored device. The camera lens cover 234 may be added, such as in a removable fashion (e.g., with pressure-sensitive adhesive and/or clip-on and/or sliding mechanisms), over the camera lens 232 of the mirrored device 230, as depicted in FIGS. 8A and 8B. Such a camera lens cover may be provided with the mirrored device (as a package including the mirrored device and the camera lens cover) when the mirrored device is sold or otherwise provided to a consumer, or may be sold as a separate product. Examples of camera lens covers that can be used with the present invention are disclosed in pending U.S. Patent Application No. 15/884,308, filed January 30, 2018 and entitled "Cell Phone Privacy Cover".

Although the invention has been described in terms of particular embodiments and applications, one of ordinary skill in the art, in light of this teaching, can generate additional embodiments and modifications. For example, although the above devices and methods are described for use in a particular manner, the devices and methods described herein could be used in a variety of different methods of use. As a further example, it will be recognized that the embodiments described above and aspects thereof may be modified, e.g., via changes in mirror size and/or shape, etc., to adapt a particular situation or device to the teachings of the invention without departing from the essential scope thereof. Accordingly, it is to be understood that the drawings and descriptions of specific embodiments herein are proffered by way of example to facilitate comprehension of the invention, and should not be construed to limit the scope thereof.

## Claims

1. A mirrored device (16) for taking and transmitting photos, comprising:
a body (31) comprising a front (32) having a mirrored front surface (34);
a digital camera (36), the digital camera (36) comprising a camera lens (38) directed toward an area in front of the mirrored front surface (34); and
a wireless communication chip (74) configured to transmit information to and receive information from a portable electronic device (14).

2. The mirrored device (16) of claim 1, further comprising one or more mirror lights (42) directing light directly or indirectly outward from the front of the mirrored device (16).

3. The mirrored device of claim 2, wherein the one or more lights (42) comprise a plurality of LEDs (light emitting diodes) with a reflector directing light from the LEDs outward from the mirrored device (16).

4. The mirrored device (16) of one of claims 1 - 3, wherein the wireless communication chip (74) comprises a Bluetooth protocol.

5. The mirrored device of one of claims 1 - 4, wherein the body (31) comprises an overall width (64) between 55 cm and 65 cm and an overall height (62) between 65 cm and 75 cm, and the mirrored front surface (34) comprises an overall mirror width (70) between 45 cm and 55 cm and an overall mirror height (68) between 55 cm and 65 cm.

6. The mirrored device (16, 230) of one of claims 1 - 5, further comprising a camera lens cover (234) configured to physically block the camera lens (38, 232).

7. The mirrored device (16) of one of claims 1 - 6, wherein the camera lens (38) is surrounded on at least top side, bottom side, and left side by the mirrored front surface (34).

8. A system (10) for taking photos of a user, comprising:
a portable electronic device (14);
the mirrored device (16) of one of claims 1 - 7; and
a communication link between the mirrored device (16) and the portable electronic device (14).

9. The system of claim 8, further comprising:
an app loaded into the portable electronic device (14), wherein the app is configured to control operation of the mirrored device (16).

10. The system of claim 9, wherein the app is configured to present controls to the user via the portable electronic device (14).

11. The system of claim 10, wherein the app presents the controls to the user via a screen (192) of the portable electronic communication device (14), and the controls include an activation control configured to activate the digital camera (36).

12. The system of claim 11, wherein the screen (192) provides a live image of the user transmitted from the mirrored device (16).

13. The system of claim 11, wherein the controls include one or more of the following controls presented on the screen (192): flash control, mirror light brightness control, zoom control, timer control.

14. A method for taking photos, comprising:
providing the mirrored device (16) of one of claims 1 - 7;
providing a portable electronic communication device (14);
providing a communication link between the mirrored device (16) and the portable electronic device (14);
activating power to the mirrored device (16);
activating photo taking of the mirrored device (16) via the portable electronic device (14);
transmitting the photo from the mirrored device (16) to the portable electronic device (14) via the communication link; and
viewing the photo on the portable electronic device (14).

15. The method of claim 14, wherein the portable electronic device (14) comprises an app configured to present controls to a user via a screen (192) of the portable electronic device (14), wherein the controls include at least one of the following controls presented on the screen (192): flash control, light brightness control, zoom control, timer control;
and the method further comprises adjusting at least one of the following via the portable electronic device (14): flash, light brightness, zoom, timer.
